# EUROPÄISCHE PATENTSCHRIFT

(11) **EP 0 855 062 B1**
(45) Veröffentlichungstag und Bekanntmachung des Hinweises auf die Patenterteilung: **27.06.2001**
(21) Anmeldenummer: 96941572.8
(22) Anmeldetag: 12.09.1996
(51) Int. Cl.: G06F 17/30

(54) **INFORMATIONSSYSTEM UND VERFAHREN ZUR SPEICHERUNG VON DATEN IN EINEM INFORMATIONSSYSTEM**
INFORMATION SYSTEM AND PROCESS FOR STORING DATA THEREIN
SYSTEME D'INFORMATIONS ET PROCEDE DE MEMORISATION DE DONNEES DANS UN SYSTEME D'INFORMATIONS

(30) Priorität: 13.10.1995 DE 19538240
(43) Veröffentlichungstag der Anmeldung: 29.07.1998
(73) Patentinhaber: Brückner, Annette, 85229 Markt Indersdorf (DE)
(72) Erfinder: Brückner, Annette, 85229 Markt Indersdorf (DE)
(74) Vertreter: Betten & Resch
(86) Internationale Anmeldenummer: DE9601719
(87) Internationale Veröffentlichungsnummer: WO9715015

(56) Entgegenhaltungen:
- WO-A-89/03567
- WO-A-95/05630
- IBM TECHNICAL DISCLOSURE BULLETIN, Bd. 29, Nr. 12, Mai 1987, NEW YORK, US, Seiten 5434-5435, XP000039638 ANONYMOUS: "Data Base for Program Design"
- THE FIFTH GENERATION CHALLENGE, ACM '84 ANNUAL CONFERENCE, 8. - 14.Oktober 1984, SAN FRANCISCO, CA, USA, Seiten 102-108, XP002027727 R. P. BRAZILE: "A General Purpose Data Base Design"

## Beschreibung

Die Erfindung betrifft ein Informationssystem, ein Verfahren zur Speicherung von Daten einer Datenbasis auf einem Speicher eines Informationssystems, wobei auf die Datenbasis mittels eines in einem EDV-System ablaufenden Programms zugegriffen werden kann, sowie eine Datenstruktur.

Unter Informationssystem soll ein System zur Erfassung/Eingabe, Speicherung, Verarbeitung/Verknüpfung, Darstellung, Wiedergewinnung/Auswertung und Ausgabe von Informationen bzw. Daten verstanden werden. Ein derartiges System besteht aus einer EDV-Anlage, einem Datenbanksystem, Datenbank-Management-System, sowie Anwendungs- und Auswertungsprogrammen, die auf das Informationssystem zugreifen können, sowie Ein- und Ausgabegeräten.

Unter einem Datenbanksystem, oder kurz Datenbank, soll entsprechend Duden, Informatik, 1993, 157 ff, ein System zur Beschreibung, Speicherung und Wiedergewinnung von umfangreichen Datenmengen verstanden werden, das von mehreren Anwendungsprogrammen benutzt werden kann. Dabei besteht die Datenbank aus einer Datenbasis, in der die Daten abgelegt werden, und Managementprogrammen, die die Daten entsprechend den vorgegebenen Beschreibungen abspeichern, verarbeiten, auswerten und wiederauffinden.

Unter Datenmodellierung soll nach Candace C. Fleming, Barbara von Halle, "Handbook of Relational Data Base Design", 1989, Addison-Wesley Publishing Company, S. 11 ein Verfahren für den Entwurf von (inhaltlich) richtigen, konsistenten, von mehreren gleichzeitig nutzbaren und flexiblen Datenbanken unter Verwendung beliebiger Datenbank-Technologien verstanden werden.

Die Güte einer Datenbank hängt wesentlich von der Qualität der Datenmodellierung und den daraus entstehenden logischen und physikalischen Datenstrukturen ab. Effektive Datenmodellierung ist daher seit vielen Jahren ein wichtiges Ziel der Entwicklung und Forschung im Datenbank-Bereich.

1977 entwickelte z.B. das American National Standards Institute (ANSI) (ANSI/X3/SPARC Committee) Anforderungen an effektive Datenbanksysteme. Diese Anforderungen unterscheiden die folgenden drei Entwurfs-Schritte für die Modellierung von Daten in einem Datenbanksystem (Fleming, v. Halle, Seite 18ff):
(1) Externes Datenstrukturmodell (engl.: "extemal schema"): eine Betrachtungsweise der Daten, Beschreibung der Datenstruktur und der notwendigen Be- und Verarbeitungsregeln aus der Sicht und entsprechend den Anforderungen eines Anwenders oder Programmierers (nach Thomas A. Bruce, "Designing Quality Databases with IDEF1X Information Models", Dorset House Publishing, 1992, S. 532).
(2) Internes oder physikalisches Datenstrukturmodell (engl.: "internal schema", "physical model"): eine Anordnung der Daten in einem physikalischen Datenstrukturmodell entsprechend der internen (physikalischen) Zugriffslogik des Datenbank-Managemensystems, z.B. in relationalen, sequentiellen, hierarchischen oder anders strukturierten Datenbank-Systemen (Bruce, S. 543).
   In einem physikalischen Datenstrukturmodell werden bei bekannten Datenmodellierungs-Lösungen sogenannte Objekte oder Entitäten (englisch "entities"), die Personen, Sachen, Lokalitäten u. dgl. sein können, Merkmale (auch Eigenschaften, charakterisierende Größen oder Attribute genannt) der Objekte und der Beziehungen (englisch "relationships") der Objekte untereinander beschrieben. Alle Informationen einer Datenbank, also sowohl die Objekte als auch ihre Beziehungen, als auch die Merkmale von Objekten und/oder Beziehungen werden z.B. in einer relationalen Datenbank durch Tabellen dargestellt.
(3) Konzeptionelles Datenstrukturmodell (engl.: "conceptual schema"): ein integrierter Blick auf die Daten, die im gesamten geschäftlichen Umfeld benötigt und verarbeitet werden, unabhängig von deren physikalischer Anordnung und Speicherung (wie im physikalischen Datenstrukturmodell dargestellt) und unabhängig von deren Betrachtung durch Anwender und/oder Programmierer (wie im externen Datenstrukturmodell dargestellt) (Bruce, S. 529).

Bei bekannten Datenmodellierungs-Lösungen sind die Datenstrukturen und die Zugriffs- und Verarbeitungsanwendungen im konzeptionellen Datenstrukturmodell von einer konkret gestellten Aufgabe in einem Projekt, z.B. Erstellung eines Warenwirtschaftssystems, abgeleitet, und zur Identifizierung oder Beschreibung der zu verarbeitenden Objekte werden die konkreten Geschäftstätigkeiten und die bei der Implementierung vorhersehbaren, zu verarbeitenden Daten herangezogen (engl.: "business rules").

Unter Beachtung der Anforderungen an die Vorgehensweise bei der Datenmodellierung ist es daher notwendig, für den Entwurf eines Datenbanksystems mindestens die oben genannten drei unterschiedlichen logischen (externes und konzeptionelles Datenstrukturmodell) bzw. physikalischen Datenstrukturmodelle zu entwickeln.

Dies ist z.B. bei Fleming, von Halle S. 20 ff. beschrieben. Dabei wird im physikalischen Datenstrukturmodell für jedes wesentliche Objekt eine eigene Tabelle definiert (vgl. S. 280ff.). Diese Objekte werden zusammen mit ihren wichtigsten Merkmalen in unterschiedlich strukturierten Tabellen gespeichert. Es gibt also mindestens so viele Objekt-Tabellen wie es Objekte gibt. Damit entstehen Objekt-Tabellen, die aufgrund unterschiedlicher Objekt-Merkmale bzw. unterschiedlicher Beziehungen zwischen Objekten unterschiedliche Strukturen aufweisen. Für jede Tabelle muß es tabellenspezifische Eingabe-, Zugriffs-, Veränderungs- und Lösch-Algorithmen geben.

Eine Erweiterung der Geschäftstätigkeit bzw. die Notwendigkeit, nachträglich weitere Daten hinzuzunehmen, bedeutet eine Veränderung bzw. Erweiterung aller Datenstrukturmodelle. Dies ist immer mit einem Redesign der (physikalischen und logischen) Datenbankstruktur, also mit entsprechendem Modellierungs- und Restrukturierungsaufwand verbunden, sowie mit einer meist sehr aufwendigen und kostenintensiven Veränderung der Anwendungsprogramme durch Programmier-Fachleute verbunden, soweit die externe Betrachtungsweise und veränderte Be- und Verarbeitungsregeln betroffen sind. Jede kleine Veränderung an der logischen und physikalen Datenstruktur bedingt eine Veränderung der Zugriffs- und Verarbeitungsalgorithmen.

Die Realisierungszeiten für solche nachträglichen Veränderungen entsprechen in keinster Weise den notwendigen operativen Anforderungen an die Verfügbarkeit der Informationen.

Ein Datenaustausch zwischen unterschiedlich strukturierten Informationssystemen ist, wenn überhaupt, nur auf der Basis des "kleinsten gemeinsamen Nenners", also der wenigen in der Regel übereinstimmenden Daten möglich, auch dies jedoch nur dann, wenn Daten zur Beschreibung von gleichartigen Objekten, Merkmalen und Beziehungen gleichartig strukturiert sind.

Beim Stand der Technik können nur solche Merkmale überhaupt gespeichert werden, deren Bedeutung - durch Definition des entsprechenden Feldes (= "Spalte") in der entsprechenden Objekte-Tabelle - vorgegeben ist. Dabei sind die Merkmale fest verbunden mit bestimmten Objekt-Typen, da die Merkmale nur in den Feldern der Tabelle ("Spalten") für einen bestimmten Objekt-Typ gespeichert werden können. Bereits bei der Anlage der Datenstruktur muß vorgesehen und vollständig implementiert werden, was später gespeichert werden kann. Informationsinhalte mit wechselnden, bzw. mit nicht vorhersehbaren Datenstrukturen können nicht oder nur rudimentär unterstützt werden.

Ähnliches gilt auch für Beziehungen zwischen Objekten; diese können nur in dem Umfang miteinander verbunden werden, in dem bei der Anlage der Datenbankstruktur die Beziehungen zwischen den Objekten definiert wurden.

Beim Stand der Technik sind die Merkmale fest verbunden mit bestimmten Beziehungen. da die Merkmale nur in den "Feldern" der Tabelle (="Spalten") für eine bestimmte Beziehung gespeichert werden können.

Unterschiedliche Verarbeitungsregeln für Objekte, die sich aufgrund organisatorischer, DV-technischer oder sicherheitstechnischer Vorgaben ergeben, werden in Bezug auf jede einzelne Objekt- bzw. Beziehungstabelle angewendet. Dies hat zur Folge, daß der Aufwand für die Implementierung dieser Regel und die Überwachung ihrer korrekten Funktionalität mindestens linear mit der Anzahl der Tabellen ansteigt.

Beim Stand der Technik wird die Entwicklung von Informationssystemen bzw. von Datenstrukturmodellen und daraus abgeleiteten DV-Anwendungen für die Erfassung/Eingabe, Speicherung, Verarbeitung, Auswertung und Ausgabe von Informationen hochgradig aufgabenspezifisch definiert und gelöst. Dies geht zurück auf die geltende Lehrmeinung über das Design von Datenbanken, wie sie z.B. in dem Handbuch von Fleming und von Halle beschrieben ist, sowie auf die Anforderungsprofile (Ausschreibung von Software-Erstellungsaufträgen, Vorgabe entsprechender Pflichtenhefte) von Informationssystem-Betreibern.

Derart spezifisch strukturierte Informationssysteme verursachen jedoch hohe Kosten für Entwicklung, Redesign, Programmierung, Wartung und Pflege.

In "A General Purpose Database Design" in The Fifth Generation Challenge, ACM 84 Anual Conference 1984, S. 102-108 wird ein System und Verfahren zum Aufbau einer Datenbasis gezeigt, bei dem eine Meta-Struktur verwendet wird, so daß die Datenstruktur für neue Anwendungen teilweise beibehalten werden kann.

Demgegenüber besteht die Aufgabe der Erfindung darin, ein Informationssystem, ein Verfahren zum Aufbau einer Datenstruktur und eine Datenstruktur zu schaffen, die die Nachteile des Standes der Technik vermeiden. und eine beliebige, auch nachträgliche Erweiterbarkeit des Informationssystems bzw. der Datenbasis ermöglichen.

Eine weitere Aufgabe der Erfindung besteht darin, eine optimale und maximale Kombinationsmöglichkeit der gespeicherten Daten zu ermöglichen.

Eine weitere Aufgabe der Erfindung besteht darin, den Zugriff auf Informationssysteme unterschiedlicher Inhalte und für unterschiedliche Aufgaben ("business rules") mit einheitlichen Zugriffs- und Transaktionsalgorithmen zu ermöglichen.

Eine weitere Aufgabe der Erfindung besteht darin, die Datenstruktur so zu gestalten, daß Zugriffsalgorithmen unabhängig von der physikalischen Datenstruktur verwendet werden können.

Eine weitere Aufgabe der Erfindung besteht darin, eine effektive Nutzung des physikalischen Speichers zu ermöglichen.

Die Erfindung ist in den Patentansprüchen näher beschrieben.

Die Erfindung liefert eine universelle physikalische Struktur eines Datenmodells, das es ermöglicht, (in einem sogenannten "Teilsystem", siehe unten) beliebige und beliebig viele Objekte unterschiedlichen Objekt-Typs zu erfassen/einzugeben, zu speichern, zu verarbeiten und auszuwerten, diese Objekte mit beliebigen und beliebig vielen Merkmalen (Attributen) zu verknüpfen und damit zu identifizieren oder zu beschreiben, beliebige Objekte beliebigen Typs mit beliebigen anderen Objekten beliebigen Typs zu verbinden/zu verknüpfen und diesen Objekt-Verknüpfungen wiederum beliebige und beliebig viele Merkmale zuzuordnen, um damit die Objektverknüpfungen zu identifizieren oder zu beschreiben.

Die Erfindung gewährleistet, daß auch solche Objekte in einem Datenbanksystem erfaßt, beschrieben/identifiziert, in Beziehung gesetzt und ausgewertet werden können, die, bzw. deren Merkmale und/oder Beziehungen und/oder Merkmale der Beziehungen bei der Strukturierung des Datenmodells bzw. Anlage der Datenbank noch nicht vorhersehbar oder bekannt waren. Damit ist eine beliebige, auch nachträgliche Erweiterbarkeit des Informationssystems möglich.

Die Erfindung vermeidet durch die Verwendung eines universellen physikalischen Datenstrukturmodells den Nachteil des Stands der Technik, der insbesondere in der jeweils spezifischen Abstimmung der Datenstruktur auf die konkret gestellten Aufgaben besteht und einhergeht mit aufwendigen, weil aufgabenspezifischen Implementierungen der Eingabe-/Erfassungs-, Verarbeitungs-/Auswertungs-, Transaktions- und Ausgabealgorithmen. Damit ist ein Zugriff auf Informationssysteme unterschiedlicher Inhalte und für unterschiedliche Aufgaben mit einheitlichen Zugriffs- und Transaktionsalgorithmen möglich. Dabei sind die Zugriffs- und Transaktionsalgorithmen unabhängig von der Datenstruktur, da man nicht wissen muß, in welcher Tabelle ein spezifischer Inhalt steht. Man muß nur wissen, um welches Element es sich handelt.

Zudem wird mit der Erfindung eine effektive Nutzung des physikalischen Speichers ermöglicht, da im Unterschied zu bekannten Systemen nur die Speicherbereiche (Tabellen-Felder bzw. Spalten) "belegt" werden, die tatsächlich benutzt werden.

Die Erfindung ermöglicht unterschiedliche oder sich nachträglich verändernde logische Betrachtungsweisen (entsprechend dem externen bzw. konzeptionellen Datenstrukturmodell) durch die nachträgliche Veränderung von Be- und Verarbeitungsalgorithmen auf der Ebene der Anwendungsprogramme zu implementieren, ohne daß dadurch die grundlegenden Transaktions- und Zugriffsalgorithmen auf die physikalische Datenstruktur verändert werden müßten.

Wo, z.B. im Hinblick auf den Zugriffsschutz, aus organisatorischen, geschäftlichen, DV-technischen, anwendungstechnischen oder sonstigen Gründen unterschiedliche "business rules" anzuwenden sind, erlaubt es die Erfindung, solcherart unterschiedlich zu verarbeitende Objekte, ihre Merkmale, Beziehungen und Merkmale von Beziehungen zu sogenannten "Objektklassen" zusammenzufassen, wobei für jede Objektklasse ein eigenes Teilsystem eingeführt wird. Wesentliches Merkmal der Erfindung ist es jedoch, daß alle Teilsysteme vollkommen identische physikalische Datenstrukturen aufweisen und daher mit den gleichen Transaktionsalgorithmen auf systemnaher Ebene für die Eingabe, Verarbeitung und Auswertung, Veränderung, Ausgabe und das Löschen bearbeitet werden können. Demgegenüber werden unterschiedliche Verarbeitungsregeln im obigen Sinne zwischen unterschiedlichen Objektklassen (= Teilsystemen) auf höherer Implementierungsebene, z.B. durch Programme des Datenbank-Managementsystems oder durch Anwendungsprogramme, realisiert.

Die Erfindung betrifft ein Informationssystem und insbesondere ein Verfahren für die Eingabe, Speicherung, Verarbeitung, Auswertung, Darstellung und Ausgabe von Informationen über
- die Existenz oder angenommene Existenz von beliebigen Objekten,
- die beschreibenden und/oder identifizierenden Merkmale von Objekten,
- die Beziehungen beliebiger Art und Anzahl zwischen Objekten beliebigen Typs und beliebiger Anzahl,
- über die beschreibenden und/oder identifizierenden Merkmale von Beziehungen zwischen Objekten
auf dafür geeigneten Speicher- und Verarbeitungssystemen (z.B. relationalen Datenbanksystemen - RDBMS).

Die Erfindung geht davon aus, daß sämtliche Informationsinhalte auf die folgenden drei Grundelemente zurückgeführt werden können:
- Objekte,
- Merkmale und
- Beziehungen zwischen Objekten.

Jedes dieser Grundelemente wird in einem eigenen, physikalisch abgegrenzten Speicherbereich (z.B. einer eigenen Tabelle in einer relationalen Datenbank) gespeichert.

Objekte sind Abbilder eines Gegenstands des Wahrnehmens, Erkennens und Denkens, stellen also Abbilder von konkreten oder abstrakten Gegenständen dar. Objekte sind nicht die Gegenstände selbst, sondern stehen stellvertretend für diese.

Die Erfindung bietet die Möglichkeit, Objekte zu logischen Objekt-Typen zusammenzufassen. Dabei wird als "Objekt-Typ" eine Gruppe von gleichartigen Objekten verstanden (z.B. Personen, KFZ's, Buchtitel) bzw. generell von Objekten, die mit anderen Objekten des gleichen Objekt-Typs hinsichtlich ihrer Merkmale und/oder ihrer Beziehungen verglichen werden sollen.

Die Liste der zu verarbeitenden Objekt-Typen kann in einer Thesaurus-Liste der Objekt-Typen ("Typenliste") gespeichert werden. Diese Liste kann jederzeit vom Betreiber des Informationssystems angepaßt und verändert werden. Dazu ist weder Programmieraufwand erforderlich, noch eine Veränderung der Datenstruktur.

Mit der Erfindung ist es möglich, beliebige Objekte, die zu beliebigen Objekt-Typen gehören können, in einer einheitlichen Struktur in einer einzigen Grundtabelle für Objekte zu speichern. Die Anzahl der Objekte in der Grundtabelle für Objekte ist durch das Verfahren nicht beschränkt. Damit müssen für den Zugriff auf ein Objekt, d.h. einen Eintrag in der Objekte-Tabelle, die Zugriffs- und Verarbeitungsalgorithmen nur einmal definiert werden und sie können einheitlich auf sämtliche Objekte angewendet werden.

Merkmale sind identifizierende und/oder beschreibende Eigenschaften von Objekten bzw. von Beziehungen zwischen Objekten.

Erfindungsgemäß besteht jedes Merkmal aus zwei Bestandteilen:
- einem Merkmals-Begriff, der als Bezeichnung für den Inhalt des Merkmals verwendet wird und
- einer Merkmals-Bedeutung.

Da gleiche Merkmals-Begriffe in unterschiedlicher Bedeutung verwendet werden können ("Kiefer" = Gesichtsknochen, "Kiefer" = Nadelbaum) wird jedem Merkmals-Begriff seine Bedeutung mit einem Bedeutungs-Kennzeichen angefügt.

Die Merkmals-Bedeutung gibt an, in welcher Bedeutung der Merkmals-Begriff bei der späteren Verarbeitung, Auswertung und Ausgabe zu verstehen sein soll. Er ist eine Bewertung des Merkmals-Begriffs durch den Erfasser.

Erfindungsgemäß werden die Merkmale in einer eigenen Grundtabelle der Merkmale gespeichert.

Jedes Merkmal, bestehend aus Merkmals-Begriff und Merkmals-Bedeutung, wird in der Grundtabelle der Merkmale genau einmal gespeichert, wobei die Anzahl der Merkmale unbeschränkt ist. Die Vielfältigkeit der Merkmals-Begriffe bzw. der Merkmals-Bedeutungen ist ebenso unbeschränkt wie die Kombinationsmöglichkeiten aus Begriff und Bedeutung.

Die Erfassung und Vergabe von Begriffen wie auch die Erfassung und Vergabe von Merkmals-Bedeutungen kann durch eigene Thesauri kontrolliert werden.

Die Erfindung ermöglicht es außerdem, beliebige Objekte beliebigen Typs miteinander in Beziehung zu setzen, um dadurch zeitliche oder räumliche Beziehungen, Abhängigkeiten, Kausalitäten, Interaktionen und beliebige andere Beziehungen zwischen Objekten einzugeben, zu speichern, zu verarbeiten und auszuwerten. Beziehungen zwischen Objekten werden in einer eigenen Grundtabelle für Beziehungen gespeichert. Die Anzahl der Einträge in dieser Grundtabelle wird durch das Verfahren nicht beschränkt.

Der Erfindung ist es möglich, jedem Objekt beliebige und beliebig viele identifizierende und beschreibende Merkmale zuzuordnen. Sie schafft eine Verbindung zwischen Objekt-Schlüssel und Merkmals-Schlüssel in einer eigenen Verbindungs-Tabelle, wobei die Anzahl der Einträge in dieser Tabelle durch das Verfahren nicht beschränkt wird.

Die Erfindung ermöglicht es, jeder Beziehung zwischen Objekten beliebige und beliebig viele identifizierende und beschreibende Merkmale zuzuordnen. Sie schafft eine Verbindung. zwischen Beziehungs-Schlüssel und Merkmals-Schlüssel in einer eigenen Verbindungs-Tabelle, wobei die Anzahl der Einträge in dieser Tabelle durch das Verfahren nicht beschränkt ist.

Die Erfindung faßt sämtliche Objekt-Typen, die den gleichen organisatorischen, DV-technischen, datenschutzrechtlichen oder sonstigen Verarbeitungsregeln ("business rules") unterliegen, in einer logischen Objektklasse zusammen. Solcherart zusammengehörige Objekte, Merkmale von Objekten, Beziehungen zwischen Objekten und Merkmale von Objektbeziehungen einer Objektklasse werden in einem "Teilsystem" gespeichert. Die physikalische Datenstruktur aller Teilsysteme ist identisch; daher können für jedes Teilsystem die gleichen Transaktions- und Zugriffsalgorithmen verwendet werden. Unterschiedliche Verarbeitungsregeln (z.B. für Datenschutz, -überwachung und -protokollierung) werden in dafür spezifischen Verarbeitungsalgorithmen implementiert. Derartige Änderungen der Verarbeitungsregeln können einmal und an zentraler Stelle vorgenommen werden, ohne daß die physikalische Datenstruktur verändert werden muß.

Die notwendigen Verbindungen zwischen zwei Teilsystemen werden in einer Verbindungs-Tabelle zwischen diesen Teilsystemen gespeichert, wobei die Schlüssel der Objekte aus beiden Teilsystemen als Fremdschlüssel in der Verbindungs-Tabelle verwendet werden.

Auch die Verbindungs-Tabellen zwischen Teilsystemen unterliegen einheitlichen und an zentraler Stelle definierten Zugriffs- und Verarbeitungsalgorithmen.

Die Anzahl der Teilsysteme innerhalb eines Gesamtsystems ist durch das Verfahren ebensowenig beschränkt wie die Anzahl der notwendigen Verbindungs-Tabellen zwischen Teilsystemen, deren Objekte miteinander in Beziehung stehen.

Die oben dargestellten Grundelemente des Verfahrens - Objekte und Merkmale, sowie die Beziehungen zwischen Objekten - können als Entitäten im Sinne des Entity-Relationship-Modells betrachtet werden. Diese Grundelemente/Entitäten werden in den oben erwähnten Grundtabellen gespeichert, wobei ein individuelles Element eines Grundelements durch einen eigenen Eintrag in der zugehörigen Grundtabelle repräsentiert ist. Zur eindeutigen Identifizierung innerhalb der Datenbank trägt jeder Eintrag jeder Grundelemente-Tabelle einen eindeutigen, z.B. numerischen, Schlüssel.

Zur Repräsentierung des Eintrags bei der Erfassung und Ausgabe wird jeder Elemente-Eintrag ergänzt um einen (i.d.R.) textuellen Bezeichner für das Element (z.B. Namen des Objekts) oder Bezeichner der Beziehung (z.B. "ist Vater von"). Dieser Bezeichner dient als symbolischer Stellvertreter des Elements bei der Eingabe und Ausgabe.

Im Falle der Grundtabelle für Merkmale wird dieser textuelle Bezeichner ersetzt durch das Paar aus Merkmals-Begriff und Merkmals-Bedeutung.

Eine Grundtabelle kann weitere Felder enthalten, dies ist jedoch für das Verfahren irrelevant.

Thesaurus-Listen für Merkmals-Begriffe und -Bedeutungen, sowie die Thesaurus-Liste der Objekt-Typen stellen weitere Entitäten dar. Sie werden in Thesaurus-Tabellen gespeichert. Thesaurus-Tabellen werden in gleicher Weise behandelt wie Grundtabellen.

Zum Speichern der Verbindungen bzw. Beziehungen zwischen Grundelementen werden Verbindungs-Tabellen verwendet. Jeder Eintrag einer Grundelemente-Tabelle überträgt sein eindeutig identifizierendes Schlüsselfeld an die Verbindungs-Tabelle. Ein Eintrag in der Verbindungs-Tabelle besteht somit (mindestens) aus dem Paar aus dem Schlüssel des Eintrags aus der einen und dem Schlüssel des Eintrags aus der anderen Grundtabelle.

Die aus den Grundelemente-Tabellen übernommenen Schlüssel (Fremdschlüssel, engl.: "foreign keys") bilden nicht zwangsläufig zusammen den eindeutig identifizierenden Schlüssel eines Eintrags in der Verbindungs-Tabelle. Vielmehr eröffnet das Verfahren auch die Möglichkeit, einem Eintrag der Verbindungs-Tabelle zusätzlich einen eigenen eindeutigen Schlüssel zuzuordnen. Damit wird es möglich, daß in einer Verbindungs-Tabelle die gleichen Einträge aus Grundtabellen mehrfach miteinander verbunden werden (z.B. A ist Halter des Fahrzeugs B; A ist Eigentümer des Fahrzeugs B).

Als wesentliche Alternativen der Verbindung zwischen Grundelementen (engl.: "relationships") sind zu unterscheiden:
1 : 1
1 : N
M : N

Nach bisherigem Stand der Technik wurden für diese drei wesentlichen Alternativen der Verbindung zwischen Grundelementen auf Ebene der physikalischen Datenstruktur drei verschiedene Datenstrukturelemente benötigt, um die Schlüssel der verbundenen Elemente zu speichern:
- Bei 1:1-Verbindungen zwischen einer Entität 1 und einer Entität 2 vererbt Entität 1 ihren Schlüssel als Fremdschlüssel an Entität 2 und umgekehrt vererbt Entität 2 ihren Schlüssel als Fremdschlüssel an Entität 1. Beide Entitäten müssen somit um ein Feld für den Fremdschlüssel erweitert werden.
- Bei 1:N-Verbindungen zwischen einer Entität 1 und einer Entität 2 vererbt Entität 2 ihren Schlüssel als Fremdschlüssel an Entität 1; er verweist in jedem Element von Entität 1 auf jedes der N verbundenen Elemente aus Entität 2.
- Bei M:N-Verbindungen zwischen einer Entität 1 und einer Entität 2 wird nach dem Stand der Technik eine eigene Verbindungstabelle generiert. Sie enthält als Mindesteinträge für jede Verbindung den Schlüssel des verbundenen Elements aus Entität 1 sowie den Schlüssel des damit verbundenen Elements aus Entität 2.

Bei der vorliegenden Erfindung werden dagegen Verbindungen zwischen Grundelementen ausschließlich in eigenen Verbindungs-Tabellen gespeichert und zwar unabhängig davon, wieviele Einträge einer Entität mit wievielen anderen Einträgen einer anderen Entität verbunden werden sollen oder dürfen.

Die stete Verwendung einer eigenen Verbindungs-Tabelle gewährleistet, daß die umfassendste Alternative der Zuordnung (= M : N) dargestellt werden kann und ermöglicht gleichzeitig, daß auch weniger umfassende Alternativen (1 : 1 bzw. 1 : N) in dieser Verbindungs-Tabelle gespeichert werden können.

Die einheitliche Verwendung von Verbindungs-Tabellen zwischen verbundenen Entitäten anstelle einer Erweiterung der Entitäten selbst (wie nach dem Stand der Technik bei 1:1- bzw. 1:N-Verbindungen nötig) stellt ferner sicher, daß einheitliche, zentral definierte Zugriffs- und Verarbeitungsalgorithmen angewendet werden können - unabhängig von der tatsächlichen Anzahl der Verbindungen zwischen zwei Entitäten. Notwendige Einschränkungen der Verbindungsmöglichkeiten, z.B. aus organisatorischen Gründen, können durch Anwendungsprogramme realisiert werden, die "oberhalb" der zentral definierten Zugriffs- und Verarbeitungsalgorithmen aufsetzen.

Ein Eintrag der Verbindungs-Tabelle kann um weitere Felder ergänzt werden. Weitere Felder können insbesondere verwendet werden, um den Eintrag bei Eingabe und Ausgabe gegenüber dem Anwender zu kennzeichnen (A "ist Vater von" B), aber auch, um Angaben über das Datum zu speichern, an dem der Eintrag angelegt oder verändert wurde, an dem der Eintrag gelöscht werden soll oder über den Erfasser / letzten Bearbeiter des Eintrags.

Weitere Felder in einer Verbindungs-Tabelle können insbesondere auch benutzt werden, um die getroffene Zuordnung näher zu bewerten, z.B. hinsichtlich der zeitlichen Relevanz (Beginn und Ende der Zuordnung zwischen Buchtitel und Ausleiher = Anfang und Ende der Leihfrist), aber auch hinsichtlich der Bewertung der Existenz der Beziehung durch den Erfasser (Beziehung existiert faktisch/fiktiv) oder der Bewertung des Verifizierungsstatus einer Zuordnung (z.B. einer Zeugenaussage in einem polizeilichen Informationssystem).

Die Erfindung ermöglicht es somit, in ein und demselben Informationssystem Informationen unterschiedlichen Wahrheits- oder Relevanzgehaltes zu speichern und aufgrund vorgenommener Bewertungen dennoch voneinander zu unterscheiden. Informationssysteme auf der Grundlage der vorliegenden Erfindung können daher verwendet werden, um Hypothesen, sowie Simulationen und Szenarien zu entwickeln und diese mit Fakten abzugleichen.

Die Grundtabelle der Beziehungen zwischen Objekten nimmt eine Doppelrolle ein: Sie stellt eine Grundtabelle dar und wird behandelt wie eine Grundtabelle. Gleichzeitig stellt sie eine Verbindungs-Tabelle in dem Sinne dar, daß sie die Verbindung von zwei Objekten (des gleichen Teilsystems) speichert. Diese Tabelle vereinigt somit die Vorteile beider Tabellen-Varianten:
Als Grundtabelle stellt sie die Beziehung zwischen Objekten wie ein Objekt selbst dar und ermöglicht es, die Beziehung insbesondere mit beliebigen identifzierenden und beschreibenden Merkmalen zu verknüpfen.
Als Verbindungs-Tabelle eröffnet sie den Vorteil, daß beliebige Objekte mit beliebigen anderen Objekten in Beziehung gesetzt/verbunden werden können, ohne daß es dazu weiterer Tabellen-Strukturen bedarf.
Verbindungs-Tabellen zwischen (den Objekten von) unterschiedlichen Teilsystemen weisen die gleiche Struktur auf wie die Grundtabelle der Beziehungen zwischen Objekten und eröffnen somit die gleichen Vorteile.

Ausführungsbeispiele werden anhand der Zeichnungen näher beschrieben. Es zeigen:
Fig. 1 eine schematische Darstellung eines Informationssystems;
Fig. 2 den Aufbau eines Eintrags in einer Grundtabelle für Objekte gemäß einem ersten Ausführungsbeispiel der Erfindung;
Fig. 3 den Aufbau einer Thesaurus-Liste für Objekt-Typen;
Fig. 4 den Aufbau eines Eintrags in einer Grundtabelle für Beziehungen gemäß dem ersten Ausführungsbeispiel der Erfindung;
Fig. 5 den Aufbau eines Eintrags in einer Grundtabelle für Merkmale gemäß dem ersten Ausführungsbeispiel der Erfindung;
Fig. 6 den Aufbau eines Eintrags in einer Thesaurus-Liste für Merkmals-Begriffe gemäß einem weiteren Ausführungsbeispiel der Erfindung;
Fig. 7 den Aufbau eines Eintrags in einer Thesaurus-Liste für Merkmals-Bedeutungen gemäß einem weiteren Ausführungsbeispiel der Erfindung;
Fig. 8 ein Schema der Darstellung und Speicherung der Verbindungen zwischen zwei Grundelementen (Objekt und Merkmal);
Fig. 9 ein Schema der Darstellung und Speicherung der Verbindung zwischen Grundbelegen und Verwaltungs-Objekten gemäß einem weiteren Ausführungsbeispiel der Erfindung;
Fig. 10 eine Gesamtdarstellung der erfindungsgemäßen Datenstruktur für ein Teilsystem; und
Fig. 11 eine Gesamtdarstellung der erfindungsgemäßen Datenstruktur mit drei Teilsystemen.

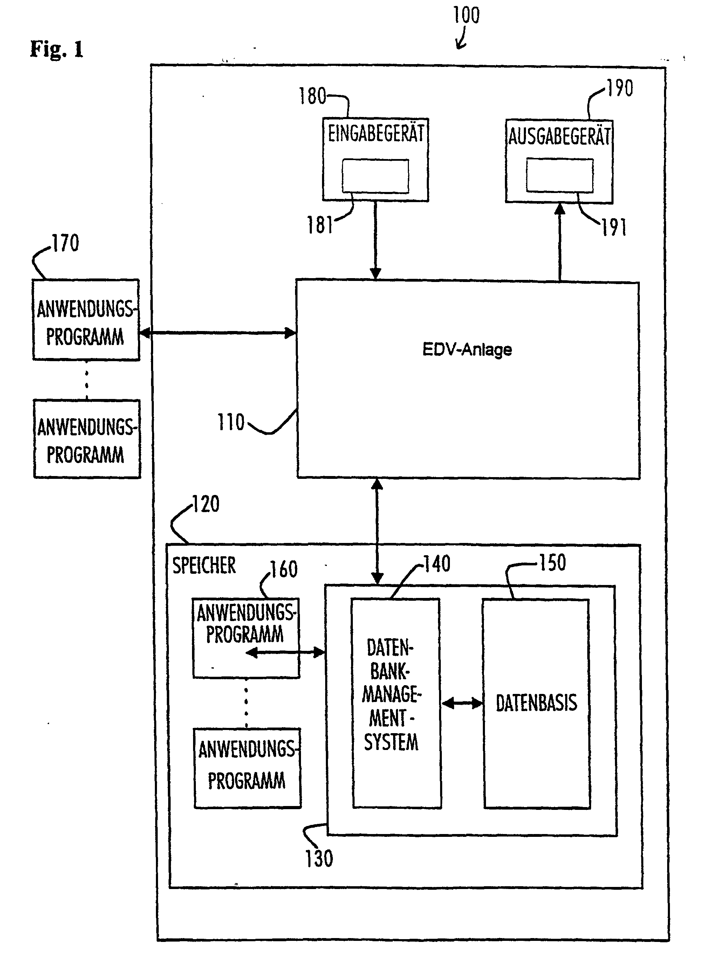

Fig. 1 zeigt eine schematische Darstellung eines Informationssystems 100, das aus einer EDV-Anlage 110 und einem Speicher 120 besteht. Auf dem Speicher 120, der irgendein maschinen-lesbarer Speicher sein kann, sind ein Datenbanksystem 130, bestehend aus einem Datenbank-Management-System 140 und einer Datenbasis 150, sowie Anwendungsprogramme 160 gespeichert, die in bekannter Weise in die Zentraleinheit der EDV-Anlage 110 geladen werden und auf das Datenbanksystem 130 zugreifen können. Außerdem können in bekannter Weise externe Benutzer über entsprechende Anwendungsprogramme auf das Informationssystem 100 bzw. das Datenbanksystem 130 zugreifen.

Das Informationssystem weist weiterhin Eingabegeräte 180 und Ausgabegeräte 190 auf, über die Daten bzw. informationen in das Informationssystem eingegeben bzw. davon ausgegeben werden können.

In sogenannten Client-/Server-Architekturen können externe Benutzer über Anwendungsprogramme 181, die auf den Eingabegeräten 180 ablaufen, bzw. Anwendungsprogramme 191, die auf den Ausgabegeräten 190 ablaufen, auf das Informationssystem 100 bzw. das Datenbanksystem 130 zugreifen.

Erfindungsgemäß werden sämtliche verarbeitbaren Daten bzw. Informationen auf drei Grundelemente zurückgeführt:
1.Objekte
2. Beziehungen zwischen den Objekten und
3. Merkmale zur Beschreibung und/oder Identifizierung von Objekten und/oder Beziehungen.

Wesentlich ist dabei, daß jedes Grundelement in einem physikalisch oder logisch abgegrenzten Speicherbereich auf dem Speicher 120 gespeichert wird und dieser Speicherbereich für die Speicherung jedes einzelnen Elements die gleiche Struktur aufweist. Bei einer relationalen Datenbank stellen diese Speicherbereiche z.B. eigene Tabellen dar.

Objekte sind Abbilder eines Gegenstand(s) des Wahrnehmens, Erkennens und Denkens, stellen also Abbilder von konkreten oder abstrakten Gegenständen dar.

Erfindungsgemäß können gleichartige oder miteinander zu vergleichende Objekte zu logischen Objekt-Typen zusammengefaßt werden. Im Handbuch von Fleming, von Halle ist ab S. 88 eine Vorgehensweise beschrieben, wie man während des Designs eines Datenbank-Strukturmodells die notwendigen Objekt-Typen hinreichend vollständig identifizieren und erfassen kann. Diese Vorgehensweise kann für das vorliegende Verfahren übernommen werden, um die notwendigen Objekt-Typen zu identifizieren.

### Beispiele für Objekt-Typen

- in einem Bibliotheksinformationssystem:: Personen (Benutzer)
Medien (Titel von Büchern,
Schallplatten usw.)
- in einem Personalinformationssystem:: Personen (Arbeitnehmer)
Organisationseinheiten
(Dienststellen, Abteilungen) usw.
- in einem polizeilichen Informationssystem:: Personen
nicht-natürliche Rechtspersonen
Fahrzeuge
Waffen, Munition
Objekte (Gebäude)
usw.

Die Liste der zu verarbeitenden Objekt-Typen wird in einer Thesaurus-Liste für Objekt-Typen ("Typenliste") gespeichert, was später näher beschrieben wird. Diese Liste kann jederzeit vom Betreiber des Informationssystems verändert und erweitert werden. Dazu ist weder Programmieraufwand erforderlich, noch eine Veränderung der Datenbankstruktur notwendig.

Bei einem weiteren Ausführungsbeispiel der Erfindung können gleichartig zu verarbeitende Gruppen von Objekt-Typen zu einer Objektklasse zusammengefaßt und in einem eigenen Teilsystem be- und verarbeitet werden.

Innerhalb eines Teilsystems werden sämtliche Objekte, die beliebigen Objekt-Typen angehören können, in einer und nur einer Grundtabelle für Objekte gespeichert.

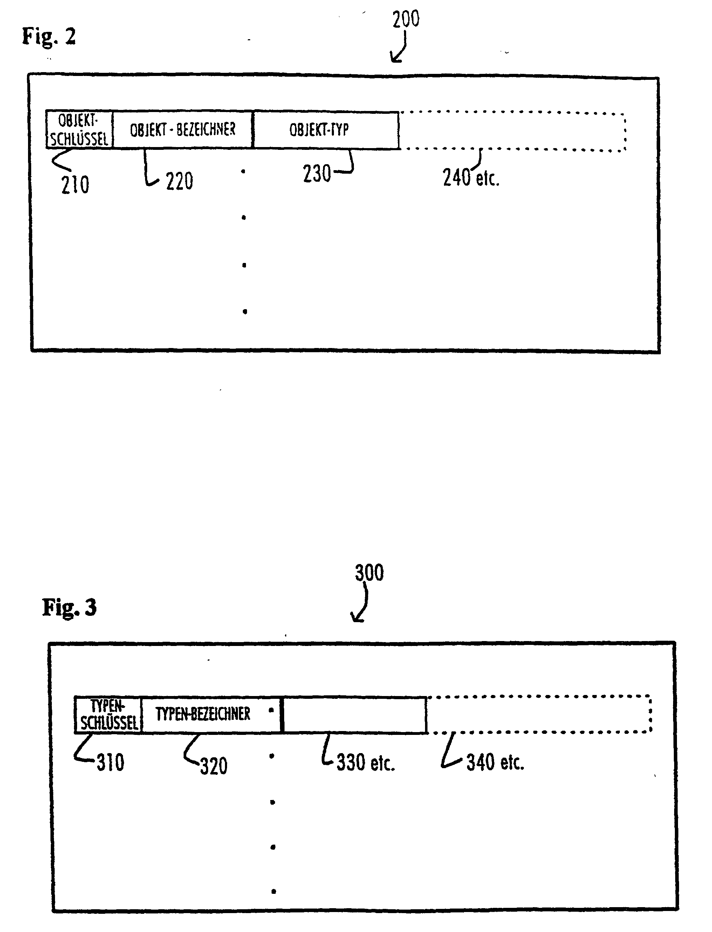

Fig. 2 zeigt den Aufbau eines Eintrags in einer Grundtabelle für Objekte. Dabei ist ein Objekt repräsentiert durch die Einträge in einer Zeile (englisch "row") in der Tabelle.

Ein Objekt wird durch einen eindeutigen Schlüssel identifiziert. Dieser Schlüssel wird in einem eigenen Schlüsselfeld 210 der Zeile hinterlegt. Ein Objekt wird durch einen Bezeichner 220 benannt. Dieser Bezeichner steht stellvertretend für das Objekt; er hat die Aufgabe, das Objekt bei der Ersteingabe zu benennen und er wird bei der Verarbeitung, besonders aber bei der Ausgabe gegenüber dem Anwender verwendet, um das Objekt zu bezeichnen.

Es ist notwendig, Objekte unterschiedlichen Typs voneinander zu unterscheiden, um gleichartige Objekte in gleicher Weise eingeben, verarbeiten, speichern und ausgeben zu können. Dazu wird ein eigener Typen-Kennzeichner 230 für den Objekt-Typ eingeführt. Er verweist als Fremdschlüssel auf die "Typenliste", die nachfolgend anhand von Fig. 3 näher beschrieben wird.

Der Eintrag für ein Objekt kann um weitere Felder 240 etc. erweitert werden, wenn dies aus organisatorischen Gründen, aufgrund von Sicherheitsanforderungen oder aus sonstigen Gründen im Einzelfall notwendig erscheint.

In möglichen weiteren Feldern können z.B. gespeichert werden:
- Angaben über den Verarbeitungs- oder Verfügbarkeitsstatus des Objekts,
- Angaben über den Ersteller des Objekts,
- Angaben über das Datum der Eingabe/des Anlegens dieses Objekts,
- Zeitpunkt der Existenz des Objekts,
- bewertende Angaben über die Existenz des Objekts (Existenz gesichert/verifiziert / hypothetisch angenommen / usw.)
- usw.

Die Liste der zu verarbeitenden Objekt-Typen wird in einer Thesaurus-Liste für Objekt-Typen ("Typenliste") gespeichert. Diese Liste kann jederzeit vom Betreiber des Informationssystems verändert und erweitert werden. Dazu ist weder Programmieraufwand erforderlich, noch eine Veränderung der Datenbankstruktur notwendig.

Der Aufbau der Thesaurus-Liste für Objekt-Typen ist in Fig. 3 dargestellt. Dabei haben die einzelnen Felder die folgende Bedeutung:
- der Typen-Schlüssel 310 ist ein eindeutiger Schlüssel, in der Regel ein Kunstschlüssel, der den Objekt-Typ innerhalb des Systems identifiziert.

Der Typenschlüssel 310 aus der in Fig. 3 dargestellten Thesaurus-Liste der Objekt-Typen wird als Fremdschlüssel 230 in die in Fig. 2 dargestellte Grundtabelle der Objekte übertragen. Er identifiziert den Objekt-Typ, zu dem jeder Eintrag (Zeile) in der Grundtabelle der Objekte gehört.
- der Typen-Bezeichner (Sprache 1) 320 ist ein entsprechend den spezifischen Anforderungen des Betreibers geeignet langes und geeignet formatiertes Feld für die Speicherung der Bezeichnung des Objekt-Typs. Dieses wird verwendet, um den Objekt-Typ in Anwendungen und bei der Ausgabe von Informationen zu benennen.

In mehrsprachigen Systemen können die fremdsprachigen Typen-Bezeichner in weiteren Feldern 330 etc. gespeichert werden, um ein "fliegendes" Umschalten zwischen zwei oder mehr Anwendungssprachen zu ermöglichen.

Die Thesaurus-Liste der Objekt-Typen kann erweitert werden um weitere Felder 340 etc., wenn dies aus organisatorischen Gründen, aufgrund von Sicherheitsanforderungen oder aus sonstigen Gründen im Einzelfall notwendig erscheint.

Zwischen Objekten beliebigen Typs können beliebig viele Beziehungen oder Verbindungen (englisch "relationships") bestehen. Sie werden verwendet, um beliebige Beziehungen, Abhängigkeiten, Kausalitäten, Interaktionen usw. zwischen den Objekten einzugeben, zu speichern, zu verarbeiten und auszuwerten.

Solche Beziehungen können z.B. sein:
- Verwandtschaftsverhältnisse zwischen Personen,
- Besitzverhältnisse zwischen Personen und Sachen,
- Angaben über den Wohn- oder Aufenthaltsort einer Person,
- Ausleihe eines Titels einer Bibliothek durch den Ausleiher usw.

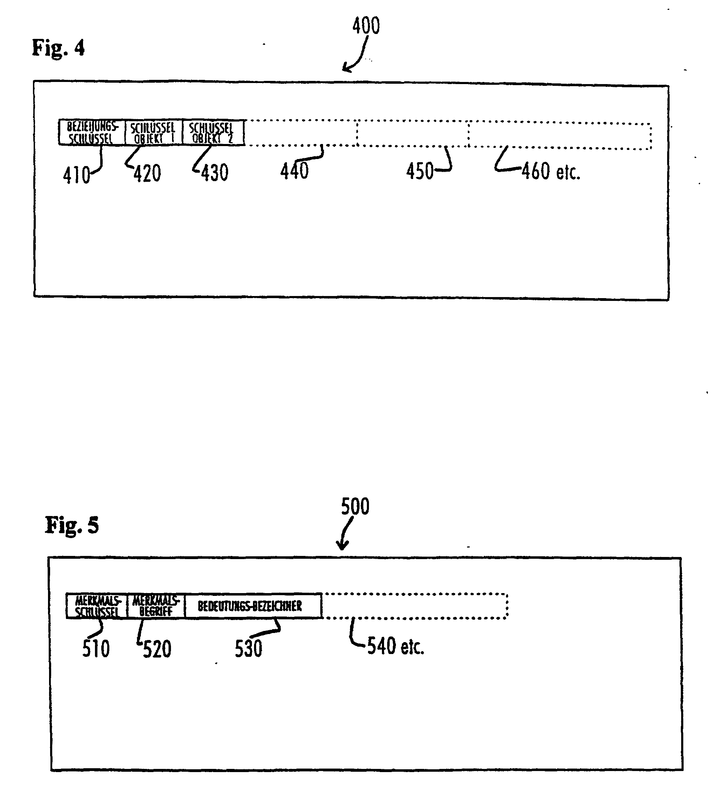

Die Beziehungen werden in einer eigenen Grundelemente-Tabelle gespeichert. Der Aufbau eines Eintrags in der Grundtabelle für Beziehungen ist in Fig. 4 dargestellt.

Für eine Beziehung zwischen zwei Objekten speichert diese Tabelle in einem Eintrag (Zeile) folgende Details in den Feldern:
- als "Beziehungs-Schlüssel" 410 einen eindeutigen Schlüssel der Beziehung. Der Schlüssel kann gebildet werden als eindeutiger Kunstschlüssel, z.B. numerischer Schlüssel, oder als zusammengesetzter Schlüssel aus dem Schlüssel des Objekts 1 und des Objekts 2, sofern dadurch Eindeutigkeit gewahrt bleibt;
- Schlüssel 420 von Objekt 1, das von der Beziehung betroffen ist;
- Schlüssel 430 von Objekt 2, das von der Beziehung betroffen ist;
- Bezeichnung der Beziehung 440, gesehen vom Objekt 1 auf das Objekt 2, als optionale Angabe;
- Bezeichnung der Beziehung 450, gesehen vom Objekt 2 auf das Objekt 1, als optionale Angabe;
- weitere Felder 460 etc.: der Eintrag (Zeile) für eine Beziehung kann erweitert werden um weitere Felder, wenn dies aus organisatorischen Gründen, aufgrund von Sicherheitsanforderungen oder aus sonstigen Gründen im Einzelfall notwendig erscheint.

In möglichen weiteren Feldern können z.B. gespeichert werden:
- Angaben über den Verarbeitungs- oder Verfügbarkeitsstatus der Beziehung,
- Angaben über das Datum der Eingabe/des Anlegens dieser Beziehung,
- Angaben über den Ersteller der Beziehung,
- Angaben über den Zeitpunkt oder Zeitraum der Existenz der Beziehung,
- bewertende Angaben über die Existenz der Beziehung (Existenz gesichert / verifiziert */* hypothetisch angenommen / usw.)
- usw.

In einem weiteren Ausführungsbeispiel der Erfindung ist es möglich, Bezeichnungen von Beziehungen entsprechend 440 und 450 nicht direkt zu speichern, sondern aus einem Thesaurus der Beziehungs-Bezeichnungen zu versorgen.

Merkmale sind beschreibende oder identifizierende Eigenschaften von Objekten und/oder Beziehungen zwischen Objekten. Jedes Merkmal besteht aus zwei Bestandteilen: einem Merkmals-Begriff und einem Kennzeichner für die Bedeutung des Merkmals.

Ein Merkmals-Begriff ist ein beliebiger speicher- und verarbeitbarer Begriff, der als (symbolische) Bezeichnung für den Inhalt des Merkmals verwendet wird. Es kann sich dabei handeln um:
- einen textuellen Begriff einer beliebigen Sprache oder eines Textsymbolvorrats (z.B. groß/klein, rot/blau/grün, München/Köln/Hamburg)
- einen numerischen Wert (z.B. 1.80, 80553, 26.08.1995)
- einen weder textuellen noch numerischen Wert (z.B. Klangmuster, grafisches Muster, Film- oder Videosequenz usw.).

Wesentlich für die Wahl des Merkmals-Begriffs im Sinne dieser Definition ist seine Eignung auf die spätere Vergleichbarkeit mit anderen, gleichartigen Begriffen.

Da gleiche Merkmals-Begriffe in unterschiedlicher Bedeutung verwendet werden können (z.B. "Kiefer" gleich "Gesichtsknochen" und "Nadelbaum") wird jeder Merkmals-Begriff mit einem Kennzeichner für die Merkmals-Bedeutung versehen.Der Bedeutungs-Kennzeichner gibt an, in welcher Bedeutung der Merkmals-Begriff bei der späteren Verarbeitung, Auswertung und Ausgabe zu verstehen sein soll. Er ist eine Bewertung der Bedeutung durch den Erfasser.

Jedes Merkmal(spaar) wird in der Grundelemente-Tabelle für Merkmale genau einmal gespeichert. Ein Merkmal "Müller: Familienname" kommt also auch für das Einwohnermelderegister einer Stadt nur einmal vor. Erst seine Anwendung = Verbindung mit dem Objekt (vom Typ Person), das den Familiennamen "Müller" trägt, kommt so oft vor, wie es Müllers gibt.

Der Aufbau eines Eintrags in der Grundtabelle für Merkmale ist in Fig. 5 dargestellt. Der Eintrag (Zeile) für ein Merkmal(spaar) besteht mindestens aus den folgenden Feldern:
- Merkmals-Schlüssel 510: eindeutiger Schlüssel für das Merkmal. Der Schlüssel kann - entsprechend den Anforderungen an die Optimierung des Zugriffs - aus einem Kunstschlüssel bestehen (z.B. numerischer Kennzeichner in einem Datenbanksystem). Der Schlüssel kann auch aus dem Paar Merkmals-Begriff/Bedeutungs-Kennzeichner selbst bestehen, das entsprechend der Anlage des vorliegenden Systems ohnehin nur einmal vorkommen kann.
- Merkmals-Begriff 520: ein entsprechend den spezifischen Anforderungen des Betreibers geeignet langes und geeignet formatiertes Feld für die Aufnahme der Merkmals-Begriffe oder eines Schlüsselverweises auf den Begriff des Merkmals, sofern die Vergabe von Merkmals-Begriffen durch einen Thesaurus unterstützt wird.
- Bedeutungs-Kennzeichner für Merkmals-Begriffe 530: ein entsprechend den spezifischen Anforderungen des Betreibers geeignet langes und geeignet formatiertes Feld für die Aufnahme des Bedeutungs-Kennzeichners oder eines Schlüsselverweises auf den Bedeutungs-Kennzeichner, sofern die Vergabe der Bedeutungs-Kennzeichner durch einen Thesaurus unterstützt wird.
- Der Eintrag (Zeile) für ein Merkmal kann erweitert werden um weitere Felder 540 etc., wenn dies aus DV-technischen, organisatorischen, aufgrund von Sicherheitsanforderungen oder aus sonstigen Gründen im Einzelfall notwendig erscheint.

Um Mehrdeutigkeiten und abweichende Schreibweisen bei an sich gleichen Begriffen zu vermeiden, kann bei einem weiteren Ausführungsbeispiel der Erfindung die Auswahl und Vergabe von Merkmals-Begriffen durch einen Thesaurus unterstützt werden (kontrolliertes Vokabular). Die Thesaurus-Unterstützung kann sich auf einzelne oder alle zu verwendenden Begriffe beziehen. Beim Thesaurus der Merkmals-Begriffe handelt es sich um eine vom Betreiber des Informationssystems selbst zu definierende und zu erweiternde Thesaurus-Liste, in der die zulässigen Begriffe für die Merkmale von Objekten und/oder Beziehungen vorgegeben werden.

### Beispiele für einenThesaurus von Merkmals-Begriffen:

Bundesländer in einem Einwohnermeldesystem
Bayern
Baden-Württemberg
Brandenburg
Abteilungsbezeichnungen in einem Personalinformationssystem Fahrzeug- oder Waffenfabrikate in einem polizeilichen Informationssystem

Mit der Vorgabe eines Thesaurus für die Merkmals-Begriffe erreicht ein Betreiber, daß gleichartige Merkmals-Begriffe von unterschiedlichen Anwendern auch gleichartig benutzt werden. Dies verbessert die spätere Vergleichbarkeit von Merkmalen, da die Gefahr reduziert oder ganz ausgeschaltet wird, daß für ein und dasselbe Merkmal unterschiedliche Merkmals-Begriffe oder an sich gleichartige Merkmals-Begriffe in unterschiedlicher (auch fehlerhafter) Schreibweise bei der Eingabe, Auswertung und bei der Ausgabe verwendet werden.

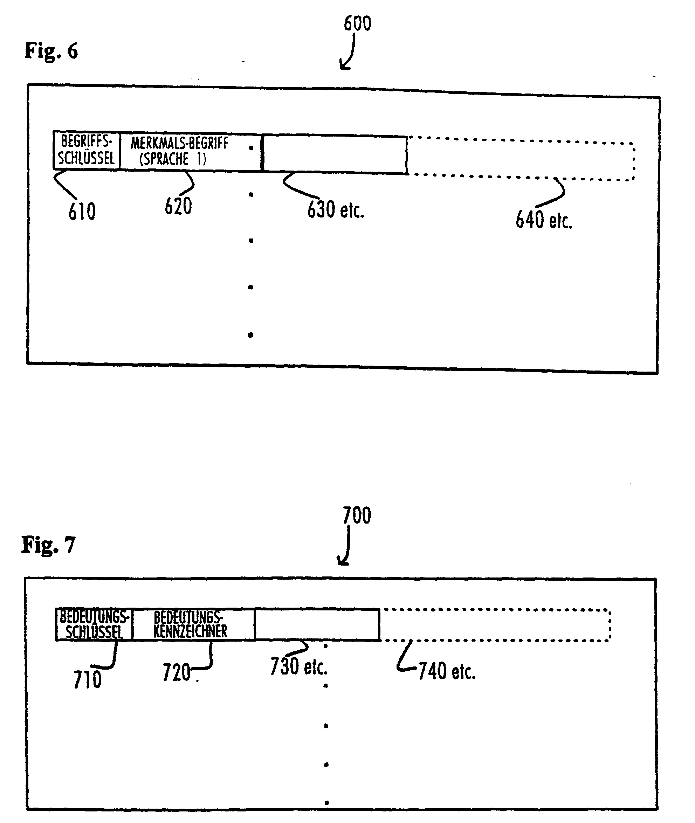

Wenn eine solche Thesaurus-Liste geführt wird, so besteht ein Eintrag (Zeile) der Thesaurus-Liste aus den in Fig. 6 dargestellten Feldern, die die folgende Bedeutung haben:
- Schlüsselfeld 610 des Merkmals-Begriffs: ein eindeutiger Schlüssel, insbesondere auch Kunstschlüssel für den Begriff, der als Referenz für den Begriff verwendet wird (Fremdschlüssel, englisch "foreign key"), wenn dieser Begriff im Feld 520 in der Tabelle der Merkmale verwendet wird.
- Begriff des Merkmals (Sprache 1) 620 ist ein entsprechend den spezifischen Anforderungen des Betreibers geeignet langes und geeignet formatiertes Feld für die Speicherung einer für den Erfasser, Verarbeiter und Auswerter der Information verständlichen, in der Regel textuellen Begriffsangabe des Merkmals (z.B. (bei Bundesländern: Bayern, Baden-Württemberg, Brandenburg, ... )

In mehrsprachigen Systemen können fremdsprachige Merkmals-Begriffe in weiteren Feldern 630 etc. gespeichert werden, um ein "fliegendes" Umschalten zwischen zwei oder mehreren Anwendungssprachen zu ermöglichen.

In weiteren, optionalen Feldern 640 etc. können weitere Angaben gespeichert werden, wenn dies im Einzelfall notwendig ist. Weitere Felder können z.B. enthalten
- Angaben über die Anzeige-Reihenfolge von Merkmals-Begriffen (z.B. "Bayern", "Baden-Württemberg", "Brandenburg" usw). die zu ein- und derselben Merkmals-Bedeutung gehören,
- Angaben über die Verfügbarkeit oder Benutzbarkeit des Begriffs durch bestimmte Anwender,
- usw.

Um Mehrdeutigkeiten bei der Erfassung und der Bedeutungs-Bewertung von Merkmalen zu vermeiden, kann bei einem weiteren Ausführungsbeispiel der Erfindung die Auswahl und Vergabe der Bedeutungs-Kennzeichner durch einen Thesaurus unterstützt werden. Dabei handelt es sich um eine vom Betreiber des Informationssystems selbst zu definierende und zu erweiternde Thesaurus-Liste, in der die zulässigen Bedeutungs-Kennzeichner für die Merkmale von Objekten und Beziehungen vorgegeben werden.

Ein Beispiel für einen einfachen Thesaurus der Merkmals-Bedeutungen könnte sein:
Familienname
   Künstlername
   Ordensname
   Geburtsname
   Geschiedenenname
   ...
Vorname
   erster Vorname
   weiterer Vorname
   ...

Mit der Vorgabe eines Thesaurus erreicht ein Betreiber, daß gleichartige Bedeutungen von Merkmalen von unterschiedlichen Anwendern auch gleichartig benutzt werden. Dies erhöht die spätere Vergleichbarkeit von Merkmalen, da die Gefahr reduziert oder ganz ausgeschaltet wird, daß für ein und dasselbe Merkmal unterschiedliche Merkmals-Bedeutungen bei der Eingabe, Auswertung und Ausgabe verwendet werden.

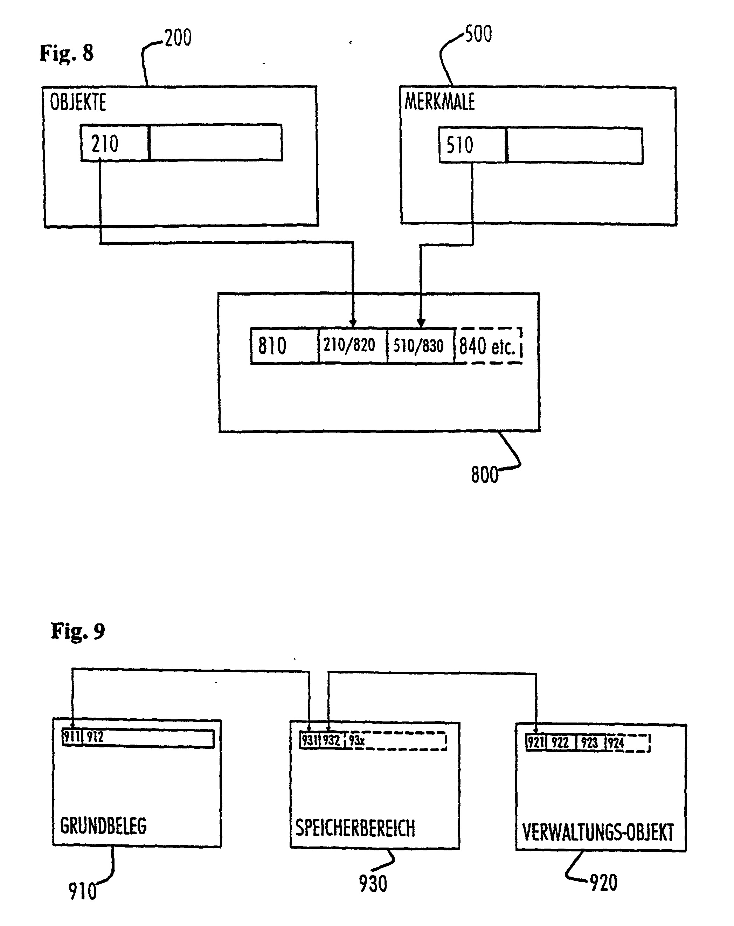

Wenn eine solche Thesaurus-Liste geführt wird, so besteht ein Eintrag (Zeile) der Thesaurus-Liste aus den in Fig. 7 dargestellten Feldern, die die folgende Bedeutung haben:
- Schlüsselfeld des Bedeutungs-Kennzeichners 710: ein eindeutiger Schlüssel für den Bezeichner, der als Referenz für den Bezeichner verwendet wird (Fremdschlüssel, engl.: "foreign key"), wenn dieser Bezeichner in der Tabelle der Merkmale verwendet wird. Dieser Schlüssel kann in hierarchischer Klassifikation und Notation aufgebaut werden. Ein Beispiel hierfür kann sein:
   1xxxxx Oberbegriff der 1. Ordnung
   11xxxx 1. Unterbegriff zur 1. Ordnung
   111xxx 1. Unterbegriff zum 1. Unterbegriff der 1. Ordnung usw.

Die hierarchische Klassifikation und entsprechende Notation kann bei der Auswertung von Merkmalen dazu verwendet werden, mit Oberbegriffen zu suchen, wobei auch detaillierte Unterbegriffe eingeschlossen werden können.
- Kennzeichner für die Merkmals-Bedeutung 720: eine für den Erfasser, Verarbeiter und Auswerter der Information verständliche, in der Regel textuelle Angabe der Bedeutung des Merkmals (z.B. "Familienname", "Geburtsort", "Kfz-Fabrikat" usw.).
- Kennzeichner in einer weiteren Sprache / weiteren Sprachen 730 etc. In den Fällen, in denen Informationssysteme mehrsprachig geführt werden müssen, kann der Begriff des Bedeutungs-Kennzeichners in weiteren Feldern in einer oder mehreren anderen Sprachen oder Codeformen angegeben werden. Dies ermöglicht die "fliegende" Umschaltung von einer zur anderen Sprache oder zu anderen Bedeutungsvarianten, ohne den eigentlichen Informationsgehalt (eindeutig identifiziert durch den Schlüssel in 710) des Bedeutungs-Kennzeichners zu verändern.
- Der Eintrag (Zeile) für einen Bedeutungs-Kennzeichner kann erweitert werden um weitere Felder 740 etc., wenn dies aus organisatorischen Gründen, aufgrund von Sicherheitsanforderungen oder aus sonstigen Gründen im Einzelfall notwendig erscheint.

Ein weiteres wesentliches Merkmal der Erfindung ist es, die Grundelemente der drei angeführten Elemente-Typen (Objekte, Beziehungen zwischen den Objekten und Merkmale zur Beschreibung und/oder Identifizierung von Objekten und/oder der Beziehung) bzw. die Grundelemente und ihnen zugeordnete Thesaurus-Listen miteinander wahlfrei in Beziehung setzen zu können. Diese Beziehungen werden in physikalisch oder logisch abgegrenzten, eigenen Speicherbereichen, z.B. in Datenbank-Tabellen, gespeichert, jeweils für die Verbindung zwischen zwei Grundelementen existiert ein einheitlich strukturierter Speicherbereich. Bei Datenbanken ist dies die Verbindungs-Tabelle (engl.: "link table").

Das Schema der Darstellung und Speicherung der Verbindung zwischen zwei Grundelementen ist in Fig. 8 dargestellt. Dabei ist beispielhaft die Verbindung zwischen Objekten entsprechend Fig. 2 und Merkmalen entsprechend Fig. 5 in einer Verbindungs-Tabelle 800 dargestellt. Jedes Objekt 200 ist durch einen eindeutigen Objekt-Schlüssel 210/820 identifiziert. Das (beschreibende oder identifizierende) Merkmal 500 ist identifiziert durch seinen Merkmals-Schlüssel 510/830. In der Verbindungs-Tabelle 800 werden jeweils in einem Eintrag (Zeile) der Schlüssel des Objekts 210/820 mit dem Schlüssel des Merkmals 510/830 zusammengeführt, das auf dieses Objekt 210 bezogen wird.

In ähnlicher Weise ist die Verbindung zwischen Beziehungen und Merkmalen aufgebaut. Die Beziehung 400 ist gemäß Fig. 4 durch ihren Beziehungs-Schlüssel 410 eindeutig identifiziert. Das (beschreibende oder identifizierende) Merkmal 500 ist identifiziert durch seinen eindeutigen MerkmalsSchlüssel 510. In der Verbindungs-Tabelle werden jeweils in einem Eintrag (Zeile) der Schlüssel der Beziehung 410 mit dem Schlüssel des Merkmals 510 zusammengeführt, das auf die Beziehung bezogen wird.

Die Verbindung zwischen den Objekten wurde bereits anhand der Grundtabelle der Beziehungen unter Bezugnahme auf Fig. 4 beschrieben.

Die Erfindung ermöglicht es, beliebig viele Elemente einer Grundelemente-Tabelle mit beliebig vielen Elementen einer anderen Grundelemente-Tabelle bzw. Thesaurus-Liste zu verbinden (M:N-Verbindungen). Dazu kann in den Verbindungstabellen ein eigener Schlüssel 810 geführt werden, der einen Eintrag in der Verbindungs-Tabelle 800 eindeutig kennzeichnet.

Neben den Schlüssel-Anteilen der verbundenen Elemente können Verbindungs-Tabellen in weiteren Feldern 840 etc. auch Angaben enthalten, die die Verbindung an sich näher beschreiben und bewerten. Dazu zählen z.B. Informationen über den Zeitpunkt, zu dem diese Verbindung relevant war ("Wann hatte ein Benutzer ein Buch aus der Bibliothek entliehen?"). Dazu können auch Informationen über die Relevanz und den Wahrheitsgehalt einer Verbindung zählen. In einem polizeilichen Informationssystem können damit z.B. Zeugenaussagen gewichtet und bewertet werden.

In einem weiteren Ausführungsbeispiel der Erfindung ist es möglich, die die Information enthaltenden Grundbelege als eigene Objekte zu speichern.

Solche Grundbelege sind z.B. Dokumente mit Texten und Grafiken, Ton-, Film-, Foto- oder Videodokumente und andere elektronisch speicherbare Grundbelege.

Die Erfindung ermöglicht es, daß solche Grundbelege elektronisch erfaßt (direkte Erfassung oder Scanning von Papierbelegen) und innerhalb des Datenbanksystems gespeichert werden.

Dabei ist es ausschließlich abhängig von der Leistungsfähigkeit des verwendeten, zugrundeliegenden Datenbank-Management-Systems, welche Grundbeleg-Formate und in welcher Länge die Grundbelege als eigene "Datensätze" innerhalb des Datenbank-Management-Systems gespeichert werden.

Ebenso ist es ausschließlich abhängig von der Leistungsfähigkeit der Eingabe- und Ausgabegeräte, ob und in welcher Qualität die Grundbelege eingegeben/erfaßt, gespeichert, verarbeitet und ausgegeben werden können.

Ein wesentliches Charakteristikum von Grundbelegen ist zunächst, daß sie bzw. ihr Inhalt nicht informationstechnisch durch die dargestellte Erfindung be- und verarbeitet werden sollen. Sie dienen, wo dies zum Nachweis der Quelle einer Information notwendig ist, vielmehr lediglich als Beleg/Beweis und Verweis auf die (z.B. gerichtsrelevante) Quelle der Information.

Jeder Grundbeleg wird daher in der vorliegenden Erfindung begleitet durch ein Verwaltungs-Objekt, mit dessen Hilfe die betreiberspezifisch notwendigen Verwaltungsinformationen über den Grundbeleg selbst gespeichert und verwaltet werden.

Fig. 9 stellt die Verbindung dar zwischen Grundbelegen und den Verwaltungsobjekten, mit deren Hilfe Grundbelege verwaltet, durch beliebige Merkmale identifiziert und beschrieben und in beliebige Beziehungen gesetzt werden können.

Dabei ist mit 910 ein logischer oder physikalischer Speicherbereich gekennzeichnet, in dem die Grundbelege gespeichert werden. Jeder Grundbeleg besteht aus dem eigentlichen Beleg in Speicherfeld 912 und einem Schlüsselfeld 911, das als eindeutiger Schlüssel für dieses Belegfeld fungiert.

Mit 920 ist ein logischer oder physikalischer Speicherbereich gekennzeichnet, der das Verwaltungs-Objekt des zugeordneten Grundbelegs darstellt. Die Struktur und Funktion der Felder von Element 920 entspricht der Struktur und den Feldern, die in Fig. 2 erläutert sind.

Die Verbindung zwischen Grundbelegen und sie verwaltende und beschreibende Verwaltungs-Objekte übernimmt ein Speicherbereich 930, in dessen Feld 931 das Schlüsselfeld des Grundbelegs aus 910 und in dessen Schlüsselfeld 932 das Schlüsselfeld 921 des Verwaltungs-Objekts aus 920 als Fremdschlüssel übertragen werden.

In einem anderen Ausführungsbeispiel der Erfindung können auch solche Verweise auf die Informationen enthaltende Grundbelege gespeichert werden, die ihrerseits nicht elektronisch gespeichert werden können; sei dies, weil organisatorische, DV-technische oder sonstige Gründe entgegenstehen, oder weil die Grundbelege aufgrund ihrer materiellen Beschaffenheit nicht geeignet sind, elektronisch gespeichert zu werden (z.B. Spurenträger in einem polizeilichen Informationssystem).

Die in Fig. 9 gezeigte Verbindung zwischen Grundbelegen und den sie beschreibenden und identifizierenden Verwaltungs-Objekten bleibt davon unberührt. Der Schlüsselverweis 911 ist bei dieser Variante kein systeminterner Verweis, sondern kann ersetzt werden durch den Verweis auf einen außerhalb des Systems liegenden Aufbewahrungsort des Grundbelegs.

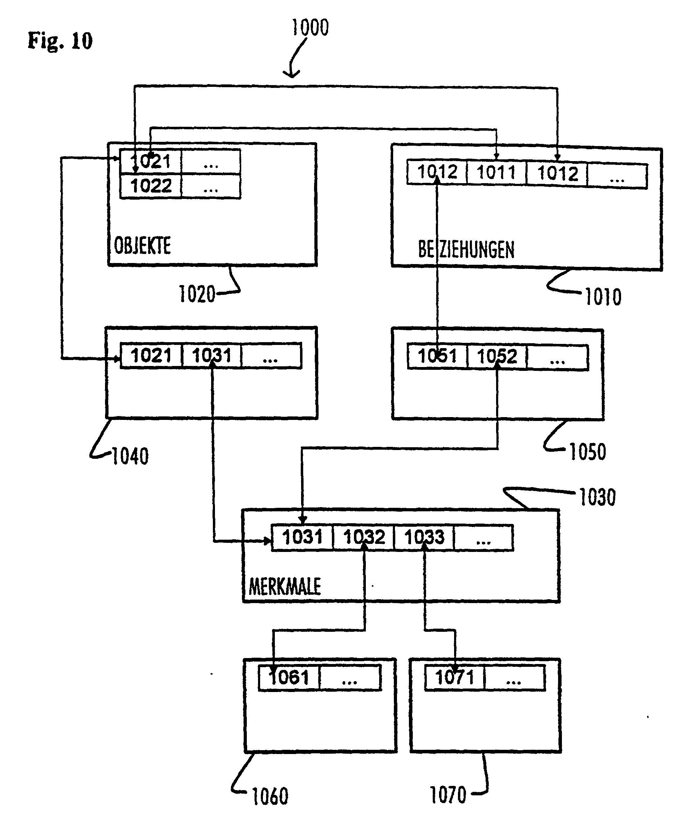

Das bisher entwickelte Datenstrukturmodell ist im Überblick in Fig. 10 dargestellt. Dieses Datenstrukturmodell 1000 wird auch als "Teilsystem" bezeichnet.

Wie bereits anhand von Fig. 4 beschrieben wurde, stehen die Objekte 1020 miteinander in Beziehungen, die in 1010 gespeichert werden. Gemäß Fig. 10 werden die Schlüssel 1021 und 1022 miteinander verbundener Objekte in der Beziehungs-Tabelle 1010 zusammengeführt.

Gemäß Fig. 9 werden Schlüssel 1021 eines Objekts 1020 und Schlüssel 1031 eines Merkmals 1030 über die Verbindungs-Tabelle 1040 zusammengeführt.

In ähnlicher Weise werden in der Verbindungs-Tabelle 1050 der Schlüssel 1031 eines Merkmals 1030 mit dem Schlüssel 1012 einer Beziehung zwischen Objekten aus 1010 über Verbindungs-Tabelle 1050 zusammengeführt.

Um Mehrdeutigkeiten bei der Erfassung und Vergabe von Merkmals-Begriffen zu vermeiden, kann die Vergabe von einzelnen oder allen Merkmals-Begriffen durch einen Thesaurus der Merkmals-Begriffe 1060 unterstützt werden.

Um Mehrdeutigkeiten bei der Erfassung und Vergabe von Merkmals-Bedeutungen zu vermeiden, kann die Vergabe von einzelnen oder allen Merkmals-Bedeutungen durch einen Thesaurus der Merkmals-Bedeutungen 1070 unterstützt werden.

In vielen Informationssystemen ist es notwendig, nicht nur unterschiedliche Objekt-Typen zu unterscheiden, sondern zusätzlich auch noch unterschiedliche Objektklassen, die gleichartig zu verarbeitende Objekt-Typen enthalten.

in einem Bibliotheksverwaltungssystem kann man z.B. unterscheiden zwischen
- den verwalteten Medien (Titeln von Büchern, Schallplatten usw.),
- den Benutzern/Ausleihem der Bibliothek,
- den Anwendern des Bibliotheksverwaltungssystems usw.

In einem Warenwirtschaftssystem kann man z.B. unterscheiden zwischen:
- den verwalteten Handelsartikeln,
- den Lieferanten der Artikel,
- den Kunden für die Artikel und
- möglicherweise den Anwendern des Systems usw.

Wesentliches Kriterium für die Definition einer neuen Objektklasse ist die Notwendigkeit, eine Gruppe von Objekt-Typen (= Objektklasse) nach einheitlichen Kriterien im Informationssystem zu erfassen, zu speichern, zu verarbeiten, auszuwerten und auszugeben, also allgemeine Bearbeitungskriterien für diese Objektklasse zu verwenden. Grundlage dieser allgemeinen Bearbeitungskriterien können organisatorische Überlegungen sein, DV-technische Vorgaben (z.B. Speichern auf unterschiedlichen Medien), sicherungs- bzw. sicherheitstechnische Notwendigkeiten (z.B. Speichern personenbezogener Daten) und andere.

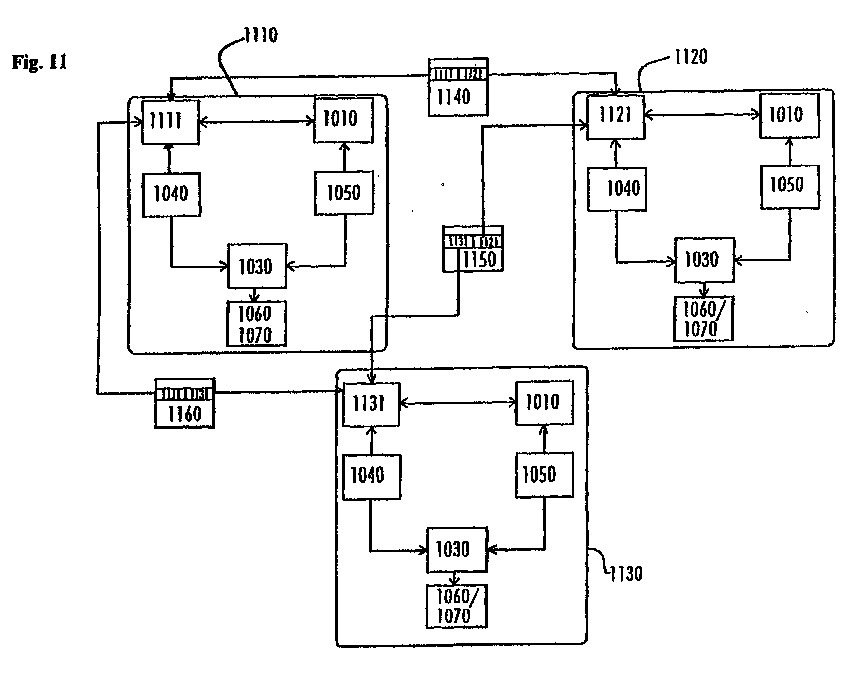

In Fällen, in denen es aufgrund solcher Überlegungen notwendig ist, mehrere Objektklassen zu bilden und miteinander in Interaktion zu setzen, bietet ein weiteres Ausführungsbeispiel der Erfindung folgende Möglichkeit:
- jede Objektklasse wird in einem eigenen Teilsystem be- und verarbeitet;
- die physikalische Datenstruktur der Teilsysteme, die unterschiedliche Objektklassen abbilden, ist gleich, soweit dies die oben beschriebene Grundstruktur eines Teilsystems betrifft. Darüber hinausgehende bzw. klassenspezifische Erweiterungen sind möglich, wie z.B. oben in den an mehreren Stellen erwähnten "weiteren Feldern" beispielhaft dargestellt.
- notwendige Interaktionen zwischen den Objekten aus unterschiedlichen Objektklassen bzw. Teilsystemen werden durch einheitlich strukturierte, be- und verarbeitete Verbindungen zwischen Teilsystemen realisiert, wie es schematisch in Fig. 11 dargestellt ist.

Die Gesamtdarstellung des Datenstrukturmodells in Fig. 11 zeigt beispielhaft drei Teilsysteme 1110, 1120 und 1130, die jeweils analog dem in Fig. 10 dargestellten Teilsystem aufgebaut sind.

Für die Verbindung zweier Objektklassen bzw. Teilsysteme werden die Objekt-Grundelemente 1111, 1121 und 1131 durch Verbindungs-Tabellen 1140, 1150, 1160 miteinander verbunden.

Struktur und Verarbeitung der Verbindungs-Tabellen zwischen Teilsystemen entsprechen der in Fig. 4 beschriebenen Struktur der Verbindungs-Tabellen zwischen Grundelemente-Tabellen innerhalb eines Teilsystems.

Ein Eintrag in der Verbindungs-Tabelle zweier Objektklassen enthält pro Eintrag (Zeile) die Verbindung zwischen einem Objekt, z.B. 1111 aus einer Objektklasse bzw. einem Teilsystem, z.B. 1110, mit einem Objekt, z.B. 1121, aus einer Objektklasse bzw. einem Teilsystem 1120. Für die Verbindung werden in der Regel die Schlüssel (1111 bzw. 1121) der verbundenen Objekte in einer Verbindungs-Tabelle, z.B. 1140, gespeichert.

In einer Verbindungstabelle, z.B. 1140, zwischen Objektklassen bzw. Teilsystemen können auch weitere Felder vorgesehen werden (siehe Fig. 4), insbesondere solche Felder, die die in einem Eintrag beschriebene Verbindung näher beschreiben, z.B.
- die zeitliche, räumliche, organisatorische Relevanz definieren,
- die Art der Existenz dieser Verbindung definieren usw.

Die Anzahl der Teilsysteme ist durch die Erfindung nicht beschränkt. Sie definiert sich durch die Anzahl der Objektklassen, die unterschiedlichen Verarbeitungsregeln unterliegen. Ebenso ist die Anzahl der Teilsysteme, die jeweils paarweise mit anderen Teilsystemen verbunden sind, durch die Erfindung nicht beschränkt.

Während man sich beim Stand der Technik an der Geschäftstätigkeit und an den Dateninhalten des Betreibers des zu schaffenden Informationssystems orientiert und die Regeln für das Design entsprechend definiert hat, ist es für die Erfindung wesentlich, daß zunächst die Geschäftstätigkeit und Dateninhalte des Betreibers des zu schaffenden informationssystems ignoriert werden.

## Patentansprüche

1. Verfahren zum Aufbau einer Datenstruktur für eine Datenbasis zur Speicherung von Daten auf einem Speicher (120) eines Informationssystems (100), wobei auf die Datenbasis (150) mittels eines in einem EDV-System (110) ablaufenden Programms zugegriffen werden kann und die Datenstruktur der in der Datenbasis (150) gespeicherten Daten durch die folgenden Verfahrensschritte aufgebaut wird:
Errichtung eines gemeinsamen Speicherbereichs zum Speichern einer Vielzahl von Objekten (200), die Abbilder von konkreten oder abstrakten Gegenständen darstellen; der für jedes einzelne Objekt (200) ein Element enthält, das mindestens den Typ (230) des Objekts und seinen Bezeichner (220) enthält;
Errichtung eines gemeinsamen Speicherbereichs zum Speichern einer Vielzahl von Beziehungen (400) (Verbindungen) zwischen Objekten (200), der für jede einzelne Beziehung (400) zwischen zwei Objekten ein Element enthält, das die Identität (420, 430) enthält bzw. auf den Speicherbereich des ersten Objekts und des zweiten Objekts verweist;
Errichtung eines gemeinsamen Speicherbereichs zum Speichern einer Vielzahl von Merkmalen (500) zur Beschreibung von Objekten und/oder Beziehungen zwischen Objekten, der für jedes einzelne Merkmal (500) ein Element enthält, das mindestens die Bedeutung (510) des Merkmals (z.B. Haarfarbe) und den dafür verwendeten Begriff (520) (z.B. blond, braun, schwarz) enthält bzw. darauf verweist;
Errichtung eines gemeinsamen Speicherbereichs zum Speichern einer Vielzahl von Verbindungen (800) zwischen Objekten (200) und Merkmalen (500), der für jedes einzelne Merkmal (500), das auf ein Objekt (200) angewendet wird, ein Element enthält, das die Identität enthält und/oder auf den Speicherbereich des Merkmals verweist und die Identität enthält und/oder auf den Speicherbereich des entsprechenden Objekts verweist; und
Errichtung eines gemeinsamen Speicherbereichs zum Speichern einer Vielzahl von Verbindungen zwischen Beziehungen (400) zwischen Objekten (200) und Merkmalen (500), der für jedes Merkmal, das auf eine Beziehung zwischen Objekten angewendet wird, ein Element enthält, das die Identität enthält bzw. auf den Speicherbereich des Merkmals und die Identität enthält und/oder auf den Speicherbereich der entsprechenden Beziehungen zwischen Objekten verweist,
wobei jeder der vorgenannten Speicherbereiche jeweils einen physikalisch oder logisch abgegrenzten Speicherbereich (910, 920, 930) darstellt und jeder einzelne Speicherbereich aus einer Folge von gleichartig strukturierten Elementen besteht, von denen jedes durch einen einzelnen oder durch einen zusammengesetzten Schlüssel-Bestandteil bzw. Kennzeichner identifiziert bzw. referenziert werden kann.

2. Verfahren nach Anspruch 1, wobei bei der Errichtung des gemeinsamen Speicherbereichs zum Speichern einer Vielzahl von Merkmalen zur Beschreibung von Objekten und / oder Beziehungen zwischen Objekten das Element für jedes einzelne Merkmal den dafür verwendeten Begriff in textueller, numerischer oder grafischer Darstellung enthält.

3. Verfahren nach einem der Ansprüche 1 oder 2, bei dem jeder einzelne Speicherbereich um weitere, gleichartig strukturierte Elemente erweitert werden kann.

4. Verfahren nach einem der Ansprüche 1 bis 3, bei dem ein weiterer, gemeinsamer Speicherbereich errichtet wird zum Speichern von unstrukturierten Datensegmenten bestehend aus Zeichenfolgen und/oder graphischen Daten und / oder Sprach-, bzw. Video- bzw. Audio-Informationen und / oder direkten oder indirekten Verweisen auf die Speicheradresse, an der das Datensegment physikalisch gespeichert wird, und
bei dem mindestens ein weiterer, gemeinsamer Speicherbereich zum Speichern der Verbindungen zwischen Objekten und Datensegmenten bzw, zum Speichern von Verbindungen zwischen Beziehungen zwischen Objekten und Datensegmente errichtet wird,
wobei jeder der o.g. Speicherbereiche einen physikalisch oder logisch abgegrenzten Speicherbereich darstellt, der aus einer Folge von gleichartig strukturierten Elementen besteht, von denen jedes durch einen einzelnen oder durch einen zusammengesetzten Schlüssel-Bestandteil bzw. Kennzeichner identifiziert bzw. referenziert werden kann.

5. Verfahren nach einem der Ansprüche 1 bis 4, bei dem jeweils weitere, gemeinsame Speicherbereiche errichtet werden zur Speicherung von Thesaurus-Informationen (600), d.h. von vorgegebenen Definitionen für Objekt-Typen, bzw. Merkmals-Begriffen, bzw. Merkmals-Bedeutungen, bzw. Bezeichnungen von Objekt-Beziehungen,
die jeweils verwendet werden zur Bezeichnung / Klassifizierung der entsprechenden Grundelemente,
wobei jeder dieser Speicherbereiche einen physikalisch oder logisch abgegrenzten Speicherbereich darstellt, der aus einer Folge von gleichartig strukturierten Elementen besteht, von denen jedes durch einen einzelnen oder durch einen zusammengesetzten Schlüssel-Bestandteil bzw. Kennzeichner identifiziert bzw. referenziert wird.

6. Verfahren nach Anspruch 5, wobei die weiteren Speicherbereiche neben den Thesaurus-Informationen weitere Elemente (630, 640) enthalten, die die gleiche Thesaurus-Information in anderer Sprache und/oder Darstellungsform enthalten.

7. Verfahren nach einem der Ansprüche 1 bis 6, das die folgenden zusätzlichen Verfahrensschritte aufweist:
Zusammenfassen einer Gruppe von Typen von Objekten, die nach einheitlichen Kriterien zu verarbeiten sind, in einer Objektklasse;
Verarbeiten jeder Objektklasse in einer jeweils eigens errichteten Basis-Datenstruktur nach Ansprüchen 1 bis 5, die zusammen ein so genanntes Teilsystem bilden, wobei zur Speicherung von Verbindungen der Objekte einer ersten Objektklasse mit den Objekten einer zweiten Objektklasse jeweils ein physikalisch oder logisch abgegrenzter, gemeinsamer Speicherbereich errichtet wird (1140, 1150, 1160), der aus einer Folge von gleichartig strukturierten Elementen besteht und dessen einzelnes Element jeweils die Identität enthält bzw. auf den Speicherbereich des einen Objekts in der ersten Objektklasse verweist, das die Identität enthält bzw. auf den Speicherbereich des anderen Objekts in der zweiten Objektklasse verweist.

8. Verfahren nach einem der Ansprüche 1 bis 7, bei dem die darin genannten Speicherbereiche jeweils physikalisch oder logisch abgegrenzte Bereiche eines Speichers sind.

9. Verfahren nach einem der Ansprüche 1 bis 7, bei dem die darin genannten Speicherbereiche Tabellen einer relationalen Datenbank darstellen.

10. Datenstruktur einer auf einem Speicher gespeicherten Datenbasis, auf die mittels eines in einem EDV-System ablaufenden Programms zugegriffen werden kann, wobei die Datenstruktur der Datenbasis nach einem der Ansprüche 1 bis 7 gebildet wird.

11. Verwendung der Datenstruktur einer Datenbasis nach Anspruch 10 zur Eingabe, Speicherung, Verarbeitung, Auswertung, Darstellung oder Ausgabe von einzelnen oder mehreren Objekten, Beziehungen zwischen Objekten und / oder Merkmalen von Objekten oder Beziehungen, und / oder Datensegmenten.

12. Informationssystem mit einem Datenverarbeitungssystem, auf dem ein Anwendungsprogramm abläuft, einem Speichersystem und einer Datenbasis, die auf dem Speichersystem gespeichert ist und auf die das Anwendungsprogramm zugreifen kann, wobei die Datenbasis eine Datenstruktur aufweist, die nach einem der Ansprüche 1 bis 7 gebildet wird.

13. Computer-lesbarer Speicher zum Speichern von Daten, auf die mittels eines auf einem EDV-System ablaufenden Anwendungsprogramms zugegriffen werden kann, wobei auf dem Speicher eine Datenbasis in einer Datenstruktur gespeichert ist, die die nach einem der Ansprüche 1 bis 7 gebildet wird.

## Claims

1. A process for creating a data structure for a database for storing data within a storage (120) of an information system (100), wherein the database (150) can be accessed via a program running on a DP system (110) and, wherein the data structure of data being stored in said database (150) is created by the following process steps:
creating a common storage area for storing a plurality of objects (200) which are images of specific or abstract items, which storage area comprises for each of said objects (200) an element that indicates at least the type (230) and the identifier (220) of said object;
creating a common storage area for storing a plurality of relationships (400) (connections) between said objects (200), which storage area comprises for each of said relationships (400) between two objects an element that comprises the identity (420, 430) of or a reference to the storage area of the first and second of said objects, respectively;
creating a common storage area for storing a plurality of attributes (500) used to describe said objects and/or said relationships between objects, which storage area comprises for each of said attributes (500) an element that indicates at least one of the meaning (510) of said attribute (i.e. hair colour) and one of the term (520) of the attribute (i.e. fair, dark, black) or a reference to said term, respectively;
creating a common storage area for storing a plurality of connections (800) between said objects (200) and said attributes (500), which storage area comprises for each attribute (500) applied to an object (200) an element that comprises the identity of, and/or reference to, the storage area of said attribute and the identity of and/or a reference to the storage area of the corresponding object; and
creating a common storage are for storing a plurality of connections between said relationships (400) between objects (200) and attributes (500), which storage area comprises for each attribute applied to a relationship between objects an element that comprises the identity of or a reference to the storage area of said attribute and the identity of and/or a reference to the storage area of said relationships between objects;
wherein each of said storage areas is represented by a physically or logically separated storage area (910, 920, 930) and each single storage area consists of a sequence of equally structured elements that is each identified respectively referenced by a single or composed key-component or identifier, respectively.

2. A process according to Claim 1, wherein, with regards to creating said common storage area for storing a plurality of attributes to describe said objects and/or said relationships between objects, the element for each of said attributes includes the term of said attribute used therefor in textual, numerical or graphical representation.

3. A process according to any of Claims 1 or 2, wherein each of said storage areas can be extended by additional, equally structured elements.

4. A process according to any of Claims 1 to 3, wherein an additional common storage area is created for storing of unstructured data segments that include character sequences and/or graphical data and/or speech, video or audio information and/or direct or indirect references to a storage location where said data segment is physically stored; and
wherein at least one additional common storage area is created for storing connections between said objects and said data segments or for storing said connections between relationships between objects and said data segments respectively;
wherein each of said storage areas is represented by a physically or logically separated storage area, which storage area consists of a sequence of equally structured elements that is each identified respectively referenced by a single or composed key-component or identifier, respectively.

5. A process according to any of Claims 1 to 4, wherein additional common storage areas are created for storing thesaurus information (600) including definitions of types of said objects, definitions of terms or of meanings of said attributes or of definitions of identifiers of said relationships between objects, respectively;
that are each used to identify or classify respective basic elements,
wherein each of said common storage areas is represented by a physically or logically separated storage area, which storage area consists of a sequence of equally structured elements that is each identified respectively referenced by a single or composed key-component or identifier, respectively.

6. A process according to Claim 5, wherein the additional storage areas further include, in addition to thesaurus information, additional elements (630, 640) comprising the same thesaurus information in at least one of different languages and/or representations.

7. A process according to any of Claims 1 to 6 further comprising the following additional process steps:
classifying groups of types of said objects, that are to be processed according to equal criteria, into respective classes of objects;
processing each class of objects within its own basic structure having been created according to any of Claims 1 to 5, which forms a so-called partial system, wherein, for storing of connections between objects of a first class of objects and objects of a second class of objects, a physically or logically separate common storage area (1140, 1150, 1160) is created, which storage area consists of a sequence of equally structured elements that each contains the identity of or reference to the storage location of said object of said first class of objects and the identity of or reference to the storage location of said object of said second class of objects.

8. A process acording to any of Claims 1 to 7, wherein each of said storage areas is a physically or logically separated area of a storage.

9. A process according to any of Claims1 to 7, wherein said storage areas include tables of a relational database.

10. A data structure of a database stored on a storage which is accessed via a program running on an EDP system, wherein said data structure of said database is created according to any of Claims 1 to 7.

11. Use of the data structure of a database according to Claim 10 for input, storage, processing, evaluation, representation or output of a single or more objects, of relationships between objects and/or attributes of said objects or of relationships and/or said data segments.

12. Information system with an EDP system, wherein a program is executed, a storage system and a database, which is stored on said storage system and which can be accessed by said program, wherein the database shows a structure having been created according to any of Claims 1 to 7.

13. Computer-readable storage for storing data therein which can be accessed by a program running on an EDP system, wherein a data base is stored on the storage and the structure of said database is created according to any of Claims 1 to 7.

## Revendications

1. Procédé d'élaboration d'une structuré de données destinée à une base de données pour mémoriser des données sur une mémoire (120) d'un système d'informations (100), dans lequel il est possible d'accéder à la base de données (150) au moyen d'un programme qui s'exécute sur un système informatique (110) et dans lequel la structure des données mémorisées dans la base de données (150) est élaborée par les étapes de procédé suivantes qui consistent à :
créer, pour mémoriser une pluralité d'objets (200) figurant les reproductions d'objets concrets ou abstraits, une zone de mémoire commune qui contient, pour chaque objet (200), un élément comportant au moins le type (230) de l'objet et son dénominateur (220) ;
créer, pour mémoriser une pluralité de liens (400) (liaisons) entres objets (200), une zone de mémoire commune qui contient, pour chaque lien (400) entre deux objets, un élément comportant l'identité (420, 430) ou renvoyant à la zone de mémoire du premier objet et du second objet ;
créer, pour mémoriser une pluralité de caractéristiques (500) destinées à décrire des objets et/ou des liens entre des objets, une zone de mémoire commune, qui contient, pour chaque caractéristique (500), un élément comportant au moins la signification (510) de la caractéristique (p. ex. la couleur de cheveux) et le mot clé (520) utilisé pour celle-ci (p. ex. blonds, bruns, noirs) ou qui y renvoie ;
créer, pour mémoriser une pluralité de liaisons (800), entre des objets (200) et des caractéristiques (500), une zone de mémoire commune qui contient, pour chaque caractéristique appliquée à un objet (200), un élément comportant l'identité et/ou renvoyant à la zone de mémoire de la caractéristique et comportant l'identité et/ou renvoyant à la zone de mémoire de l'objet correspondant ; et à
créer, pour mémoriser une pluralité de liaisons (800) entre des liens (400) entre des objets (200) et des caractéristiques (500), une zone de mémoire commune qui contient, pour chaque caractéristique appliquée à un lien entre objets, un élément comportant l'identité et/ou renvoyant à la zone de mémoire de la caractéristique et comportant l'identité et/ou renvoyant à la zone de mémoire de l'objet correspondant ;
chacune des zones de mémoire susmentionnées étant une zone de mémoire (910, 920, 930) délimitée physiquement ou logiquement et chaque zone de mémoire étant constituée d'une suite d'éléments structurés de manière similaire, dont chacun peut être identifié ou référencé par un composant formant clé, seul ou composé.

2. Procédé selon la revendication 1, dans lequel, lors de la création de la zone de mémoire commune pour mémoriser une pluralité de caractéristiques destinées à la description d'objets et/ou de liens entre objets, l'élément destiné à chaque caractéristique contient la dénomination utilisée pour celle-ci sous la forme d'une représentation textuelle, numérique ou graphique.

3. Procédé selon l'une des revendications 1 ou 2, dans lequel chaque zone de mémoire, peut être étendue à d'autres éléments de structure similaire.

4. Procédé selon l'une des revendications 1 à 3, dans lequel est créée une autre zone de mémoire commune pour mémoriser des segments de données non structurés constitués de suites de signes et/ou de données graphiques et/ou d'informations linguistiques, ou vidéo ou audio, et/ou pour le renvoyer directement ou indirectement à l'adresse de mémorisation à laquelle le segment de données est mémorisé physiquement et
dans lequel est créée au moins une autre zone de mémoire commune pour mémoriser des liaisons entre objets et segments de données ou pour mémoriser des liaisons entre des liens entre objets et segments de données,
où chacune des zones de mémoire susmentionnées est une zone de mémoire délimitée physiquement ou logiquement, qui est constituée d'une suite d'éléments structurés de manière similaire, dont chacun peut être identifié ou référencé par un composant formant clé, seul ou composé.

5. Procédé selon l'une des revendications 1 à 4, dans lequel sont créées, pour mémoriser des informations thésaurus (600), c'est-à-dire des définitions données de types d'objets, ou des mots clés de caractéristiques, ou des significations de caractéristiques ou des désignations de liens d'objets, d'autres zones de mémoire communes qui sont utilisées pour désigner / classer les éléments de base correspondants,
chacune de ces zones de mémoire étant une zone de mémoire délimitée physiquement ou logiquement, constituée d'une suite d'éléments structurés de manière similaire, dont chacun peut être identifié ou référencé par un composant formant clé, seul ou composé.

6. Procédé selon la revendication 5, dans lequel les autres zones de mémoire contiennent, outre les informations thésaurus, d'autres éléments (630, 640) qui contiennent la même information de thésaurus dans une autre langue ou sous une autre forme de représentation.

7. Procédé selon l'une des revendications 1 à 6, comprenant les étapes de procédé supplémentaires suivantes, qui consistent à :
regrouper dans une catégorie d'objets, un ensemble de types d'objets, destinés à être traités suivant des critères homogènes ;
traiter chaque catégorie d'objets dans une structure de base de données créée spécifiquement selon les revendications 1 à 5, qui ensemble constituent un système dit partiel, une zone de mémoire commune (1140, 1150, 1160), délimitée physiquement ou logiquement et constituée d'une suite d'éléments structurés de manière similaire dont chacun contient l'identité ou renvoie à la zone de mémoire d'un objet dans la première catégorie d'objets, lequel contient l'identité ou renvoie à la zone de mémoire de l'autre objet dans la seconde catégorie d'objets, étant créée pour mémoriser des liaisons des objets d'une première catégorie d'objets avec les objets d'une seconde catégorie d'objets.

8. Procédé selon l'une des revendications 1 à 7, dans lequel les zones de mémoire mentionnées constituent chacune une zone d'un dispositif de mémorisation, délimitée physiquement ou logiquement.

9. Procédé selon l'une des revendications 1 à 7, dans lequel les zones de mémoire mentionnées constituent des tableaux d'une base de données relationnelle.

10. Structure de données d'une base de données mémorisée sur une mémoire, dans laquelle il est possible d'accéder à la base de données au moyen d'un programme qui s'exécute sur un système informatique et dans laquelle la structure des données mémorisées dans la base de données est conçue selon l'une des revendications 1 à 7.

11. Utilisation de la structure d'une base de données selon la revendication 10 pour saisir, mémoriser, traiter, exploiter, représenter ou éditer des objets, isolés ou multiples, des liens entre des objets et/ou des caractéristiques d'objets ou de liens, et/ou des segments de données.

12. Système d'information comportant un système de traitement de données, sur lequel s'exécute un programme d'utilisation, un système à mémoire et une base de données qui est mémorisée sur le système à mémoire et à laquelle peut accéder le programme d'application, la base de données présentant une structure de données conçue selon l'une des revendications 1 à 7.

13. Système de mémorisation lisible par ordinateur, destiné à la mémorisation de données, auxquelles il est possible d'accéder au moyen d'un programme s'exécutant sur un système informatique, une base de données étant mémorisée sur le système à mémoire, suivant une structure de données conçue selon l'une des revendications 1 à 7.
